(19) Europäisches Patentamt / European Patent Office / Office européen des brevets

(11) **EP 2 581 590 B1**

(12) **FASCICULE DE BREVET EUROPEEN**

(45) Date de publication et mention
de la délivrance du brevet:
**08.05.2019 Bulletin 2019/19**

(51) Int Cl.:
*F02D 41/00* (2006.01)     *F02M 26/06* (2016.01)
*F02D 41/14* (2006.01)     *F02B 29/04* (2006.01)

(21) Numéro de dépôt: **12290308.1**

(22) Date de dépôt: **20.09.2012**

(54) **Procédé de commande d'une vanne intégrée dans un circuit de recirculation des gaz d'échappement d'un moteur**

VERFAHREN ZUR STEUERUNG EINES ABGASRÜCKFÜHRVENTILS

METHOD FOR CONTROLLING AN EXHAUST GAS RECIRCULATION VALVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2011 FR 1103114**

(43) Date de publication de la demande:
**17.04.2013 Bulletin 2013/16**

(73) Titulaire: **IFP Energies nouvelles**
**92500 Rueil-Malmaison (FR)**

(72) Inventeurs:
• **Bresch-Pietri, Delphine**
**94300 Vincennes (FR)**
• **Leroy, Thomas**
**78100 Saint Germain en Laye (FR)**
• **Chauvin, Jonathan**
**75017 Paris (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A2- 1 416 138        EP-A2- 2 290 209**
**WO-A1-2004/055344        WO-A2-2010/010246**
**DE-A1-102007 010 501        FR-A1- 2 833 998**
**FR-A1- 2 910 929        US-B1- 6 170 469**

• **JOHN B HEYWOOD ED - HEYWOOD J B: "INTERNAL COMBUSTION ENGINE FUNDAMENTALS, passage", 1 janvier 1988 (1988-01-01), INTERNAL COMBUSTION ENGINE FUNDAMENTALS; [MCGRAW-HILL SERIES IN MECHANICAL ENGINEERING], NEW YORK, MCGRAW-HILL, US, PAGE(S) 308 - 321, XP008135606, ISBN: 978-0-07-100499-2 * page 308 - page 313 ***

**Description**

La présente invention concerne le domaine de la commande d'un moteur et plus particulièrement le contrôle du taux de recirculation de gaz brûlés pour un moteur à essence muni d'un circuit de recirculation des gaz d'échappement, dit circuit EGR.

La réduction de la taille de la cylindrée ("downsizing") des moteurs à essence apparaît actuellement comme la solution privilégiée pour réduire la consommation des moteurs à essence. Cette technologie permet, en effet, de déplacer les points de fonctionnement du moteur dans les zones de meilleur rendement et de limiter ainsi les pertes par pompage, inhérentes au fonctionnement d'un moteur à combustion interne. Ce type de moteur nécessite alors la présence d'un compresseur, entraîné par une turbine située dans la ligne d'échappement. Un tel dispositif est utilisé pour améliorer le remplissage en air du cylindre et assurer un couple équivalent à celui d'un moteur de cylindrée classique. De la sorte, il est possible de fournir les mêmes performances, tout en réduisant drastiquement la consommation.

Néanmoins, l'utilisation d'une telle technologie augmente fortement les risques d'apparition du phénomène de cliquetis. Lorsque le moteur est en pleine charge, les conditions thermodynamiques dans la chambre de combustion peuvent être préjudiciables à la stabilité du mélange et engendrer son auto-inflammation. Ce phénomène peut, à terme, détériorer fortement la chambre de combustion.

Pour résoudre ce problème, usuellement, on dégrade l'avance à l'allumage. Cette solution engendre une augmentation de la température des gaz en fin de combustion et donc sur l'ensemble de la ligne d'échappement. Ainsi, pour compenser ce phénomène, on enrichit le mélange à l'admission.

Une telle méthode présente deux inconvénients : tout d'abord, elle augmente la consommation du moteur ; de plus, elle détériore l'efficacité du catalyseur placé en aval du collecteur échappement et qui convertit de façon optimale les polluants issus de la combustion lorsque le mélange est en proportions stoechiométriques.

Dans ce contexte, la recirculation de gaz brûlés de l'échappement EGR à l'admission est une voie prometteuse. En effet, l'introduction de gaz brûlés dans un cylindre du moteur, qui ne réagissent pas lors de la combustion, permet de diminuer la température globale de combustion et de limiter l'apparition de cliquetis. Les avantages du "downsizing" en termes de rendement et de consommation sont donc préservés. En outre, l'introduction de gaz brûlés permet également de réduire la température des gaz d'échappement et donc de limiter l'impact de ces derniers sur le catalyseur ou la turbine.

Cependant, une telle stratégie a une influence importante sur le fonctionnement global du moteur. Par exemple, la masse d'air emprisonnée dans le cylindre est moins importante dans une configuration avec EGR, puisque des gaz brûlés prennent la place de l'air frais dans le cylindre. Pour fonctionner à stoechiométrie, il est nécessaire d'adapter la boucle de carburant à la boucle d'air et donc de contrôler très précisément la quantité de gaz brûlés dans le cylindre. Par ailleurs, un procédé de contrôle performant est essentiel pour la gestion des transitoires de couple, notamment à bas régime où une trop forte présence de gaz brûlés peut éteindre la combustion.

Pour réaliser le contrôle de la quantité de gaz brûlés, les systèmes actuels (décrits par exemple dans les demandes de brevet FR 2947007 A1, EP 2098710 A1, et EP 0485089 A2) utilisent un capteur de débit d'air, qui présente l'inconvénient d'être imprécis. Les imprécisions de ce capteur ne permettent pas un contrôle optimal de la composition des gaz dans le collecteur d'admission et donc de fonctionner à stoechiométrie, ce qui engendre des imprécisions au niveau de la commande du moteur et ce qui influe sur le fonctionnement global du moteur. La demande de brevet WO 2010/010246 décrit un procédé de gestion d'un circuit de recirculation de gaz d'échappement d'un moteur thermique à essence, comprenant une vanne de régulation de débit et le procédé comprenant l'étape de détecter un paramètre de fonctionnement représentatif d'une différence de pression entre une pression en amont et une pression en aval de la vanne de régulation de débit.

Le contrôle de la composition du mélange à l'admission est une composante essentielle du contrôle de la combustion des moteurs à essence suralimentés. Le but de la présente invention est de proposer un procédé alternatif permettant de contrôler en temps réel la composition des gaz à l'admission pour un moteur instrumenté d'un capteur de différence de pression. L'avantage de ce capteur de différence de pression est d'augmenter la précision des valeurs mesurées et donc d'augmenter également la précision au niveau du contrôle du moteur. L'utilisation d'un tel capteur nécessite l'application d'une relation de perte de charge ponctuelle. Ainsi, on contrôle une vanne EGR pour respecter une consigne de fonction de gaz brûlés.

**Le procédé selon l'invention**

Le procédé selon l'invention concerne un procédé de commande d'un moteur à combustion comprenant au moins un cylindre et un collecteur d'admission, le moteur étant équipé d'un turbocompresseur et d'un circuit de recirculation des gaz EGR basse pression intégrant une vanne EGR. Selon l'invention, le procédé de commande comporte les étapes suivantes :

a) on mesure une différence de pression $\Delta P$ au niveau de la vanne EGR ;

b) on choisit une consigne $BGR^{sp}$ de fraction de gaz brûlés dans ledit collecteur d'admission ;

c) on calcule une consigne d'ouverture $O^{sp}$ de ladite vanne EGR à partir d'une relation de perte de charge ponctuelle appliquée au niveau de ladite vanne EGR, telle que la relation de Barré-Saint Venant, ladite relation de perte de charge ponctuelle reliant l'ouverture de la vanne EGR à la différence de pression $\Delta P$ au niveau de la vanne EGR, et à ladite consigne $BGR^{sp}$ de fraction de gaz brûlés dans le collecteur d'admission ; la relation de perte de charge ponctuelle est adaptée au moteur grâce à un modèle de la boucle d'air, qui est un modèle dynamique du circuit d'admission d'air et du circuit de recirculation des gaz brûlés EGR. Dans ce cas, le modèle de la boucle d'air peut être composé d'un modèle de la dynamique des gaz brûlés, et d'un modèle statique de remplissage du cylindre intégré dans un modèle dynamique du collecteur d'admission; et ledit modèle de la boucle d'air étant construit en réalisant les étapes suivantes :

i) on applique un modèle statique de remplissage du cylindre pour calculer un débit massique de remplissage du cylindre $D_{asp}$ à partir des paramètres du moteur ;

ii) on applique un modèle dynamique du collecteur d'admission pour calculer un débit massique en aval du compresseur $D_{thr}$ à partir du débit massique de remplissage du cylindre $D_{asp}$, et des paramètres du moteur ;

iii) on applique un modèle de dynamique de transport des gaz pour déterminer une consigne de fraction des gaz brûlés dans le volume en aval de la vanne EGR $BGR_{bp}^{sp}$ à partir de la consigne de fraction de gaz brûlés dans le collecteur d'admission $BGR^{sp}$ ; et

iv) on applique un modèle dynamique de mélange des gaz frais et des gaz brûlés pour déterminer une consigne de débit massique de gaz brûlés introduits par la vanne EGR $D_{gb}^{sp}$ à partir du débit massique en aval du compresseur $D_{thr}$, des paramètres du moteur et de la consigne de fraction de gaz brulés dans le volume en aval de la vanne EGR $BGR_{bp}^{sp}$, la relation de perte de charge ponctuelle étant fonction de cette consigne;

iv) on applique une relation de perte de charge ponctuelle définissant une consigne de surface efficace de la vanne $S^{sp}(\Delta P)$ en fonction de la différence de pression au niveau de la vanne EGR $\Delta P$ et de ladite consigne de fraction de gaz brûlés dans le collecteur d'admission $BGR^{sp}$, puis on traduit la consigne de surface efficace de la vanne $S^{sp}(\Delta P)$ en une consigne d'ouverture $O^{sp}$ de la vanne EGR à partir d'une cartographie de la vanne et

d) on commande ladite vanne EGR en fonction de ladite consigne d'ouverture de la vanne EGR.

Dans un mode de réalisation, le modèle de la dynamique de mélange des gaz frais et des gaz brûlés est défini par la formule :

$$\frac{d}{dt} BGR_{bp} = \frac{rT_{atm}}{P_{atm}V_{bp}}\left(-\left[D_{gb}(t) + D_{air}(t)\right]BGR_{bp} + D_{gb}(t)\right)$$

avec $BGR_{bp}$ : fraction de gaz brûlés dans le volume en aval de la vanne EGR,

$r$ : constante des gaz parfaits,

$T_{atm}$ : température atmosphérique,

$P_{atm}$ : pression atmosphérique,

$V_{bp}$ : volume de mélange d'air frais et des gaz brûlés,

$D_{gb}$ : débit massique de gaz brûlés introduit par la vanne EGR, et

$D_{air}$ : débit massique d'air frais en entrée de la ligne d'admission.

En outre, le modèle de dynamique de transport des gaz peut représenter un éloignement spatial entre la vanne EGR et le collecteur d'admission dudit moteur et correspond à un retard pur.

De plus, la relation de perte de charge ponctuelle peut se baser sur une relation de Barré-Saint Venant, linéarisé pour les faibles valeurs de différence de pression $\Delta P$ au niveau de la vanne EGR, qui vérifient l'inéquation $\Delta P < 10\% P_{atm}$.

Avantageusement, la différence de pression au niveau de la vanne EGR est mesurée par au moins un capteur de pression en amont et/ou en aval de la vanne EGR.

De préférence, le choix de ladite consigne de fraction de gaz brûlés dans le collecteur d'admission $BGR^{sp}$ est déterminé par une cartographie du moteur issue d'une calibration statique.

En outre, l'invention concerne un moteur à combustion comprenant au moins un cylindre et un collecteur d'admission, ledit moteur à combustion étant pourvu d'un turbocompresseur et d'un circuit de recirculation des gaz brûlés EGR basse pression comportant une vanne EGR pourvue d'un capteur de différence de pression au niveau de ladite vanne EGR, le moteur comprenant des moyens de commande dudit moteur, lesdits moyens de commande étant destinés à appliquer le procédé de commande selon l'invention.

D'autres caractéristiques et avantages du procédé selon l'invention, apparaîtront à la lecture de la description ci-après d'exemples non limitatifs de réalisations, en se référant aux figures annexées et décrites ci-après.

## Présentation succincte des figures

La figure 1 illustre un schéma de moteur à essence suralimenté comportant un circuit EGR basse pression (EGR-BP).
La figure 2 représente un logigramme du procédé selon l'invention.
La figure 3 illustre une cartographie d'une vanne EGR, montrant le rapport entre la surface efficace et l'ouverture de la vanne.

## Description détaillée de l'invention

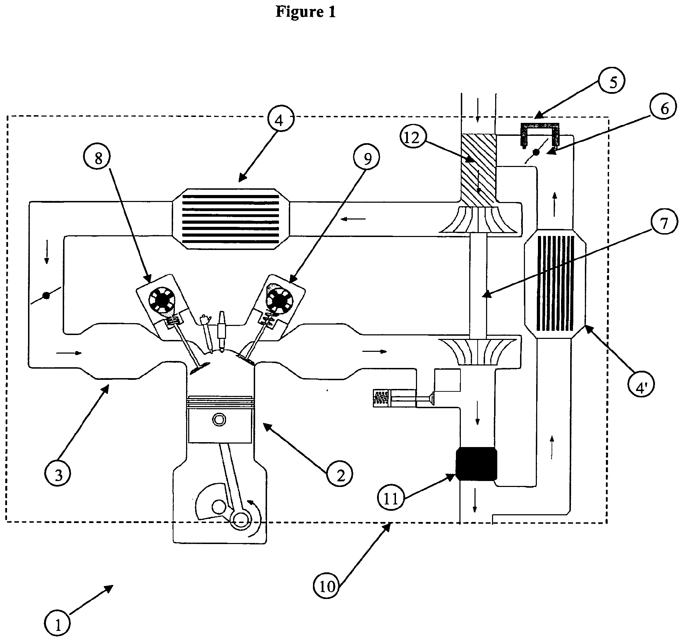

La figure 1 représente un moteur à essence (1) équipé d'un circuit de recirculation des gaz brûlés EGR. Pour cet exemple de réalisation, il s'agit d'un circuit EGR basse pression. Au moins un cylindre (2) du moteur à combustion (1) est alimenté en air et gaz brûlés à partir d'un collecteur d'admission (3). Le circuit d'admission d'air est équipé d'un refroidisseur (4) et d'un compresseur d'un turbocompresseur (7). La ligne d'échappement est composée d'un collecteur d'échappement, d'une turbine du turbocompresseur (7), d'une dérivation, pour injecter une partie des gaz brûlés dans le circuit d'admission d'air. Cette partie du circuit est équipée notamment d'un refroidisseur (4') et d'une vanne commandée, dite vanne EGR (6), qui pilote la quantité de gaz brûlés injectés dans le circuit d'admission d'air. Ce moteur est en particulier équipé d'un capteur (5) de différence de pression entre l'amont et l'aval de la vanne EGR. Le moteur (1), tel que représenté en figure 1, est également équipé d'un dispositif d'injection directe et d'une distribution variable, éléments usuellement présents sur un moteur "downisizé" (dont on a réduit la cylindrée) mais dont la présence n'intervient pas dans le procédé selon l'invention.

Le circuit de recirculation des gaz brûlés considéré vient prélever des gaz brûlés à l'échappement du moteur en sortie du catalyseur (11), situé en aval de la turbine du turbocompresseur (7), pour les réinjecter à l'admission d'un cylindre (2) en amont du compresseur du turbocompresseur (7). La quantité de gaz brûlés réinjectés dans la ligne d'admission est pilotée par la vanne EGR (6) commandée située en aval du circuit de recirculation des gaz brûlés EGR.

Un moteur à essence fonctionnant de façon optimale lorsque la proportion du mélange air/essence permet d'assurer une combustion complète du carburant sans excès d'air, on considère généralement que les gaz d'échappement sont constitués intégralement de gaz brûlés. De la sorte, le circuit de recirculation des gaz brûlés EGR est rempli uniquement de gaz brûlés.

Le procédé selon l'invention permet de contrôler de manière précise la vanne EGR (6) d'un circuit de recirculation de gaz d'échappement. Il s'appuie sur l'utilisation d'un capteur de différence de pression au niveau de la vanne EGR et sur l'application d'une relation de perte de charge au niveau de la vanne EGR.

Le procédé selon l'invention comporte les étapes listées ci-dessous :

a) on mesure une différence de pression $\Delta P$ au niveau de la vanne EGR ;
b) on choisit une consigne $BGR^{sp}$ de fraction de gaz brûlés dans ledit collecteur d'admission (3) ;
c) on calcule une consigne d'ouverture $O^{sp}$ de ladite vanne EGR (6) à partir d'une relation de perte de charge ponctuelle au niveau de la vanne EGR, telle que la relation de Barré-Saint Venant, ladite relation de perte de charge ponctuelle reliant l'ouverture de la vanne EGR à la différence de pression $\Delta P$ au niveau de la vanne EGR, et à ladite consigne $BGR^{sp}$ de fraction de gaz brûlés dans le collecteur d'admission ; et
d) on commande ladite vanne EGR (6) en fonction de ladite consigne d'ouverture de la vanne EGR (6).

Notations

Au cours de la description, les termes amont et aval sont définis par rapport au sens de l'écoulement des fluides dans la boucle d'air (10). De plus, les notations suivantes seront utilisées :

Paramètres du moteur

- $P_{adm}, T_{adm}$ : pression et température dans le collecteur d'admission. Classiquement, la température d'admission est considérée constante. En effet, l'échangeur situé en amont du collecteur est dimensionné de sorte à assurer une telle régulation.
- $P_{atm}, T_{atm}$ : pression et température atmosphériques. Elles peuvent être considérées comme constantes.
- $T_{am}$ : température en amont, en entrée, de la vanne EGR, cette température est imposée par le passage dans l'échangeur (4') situé dans le circuit de recirculation des gaz brûlés.
- $V_{bp}$ : volume de mélange d'air frais et des gaz brûlés, en aval de la vanne EGR. Il s'agit du volume des canalisations à l'intersection des canalisations d'arrivée d'air frais et des canalisations d'arrivée des gaz brûlés, ce volume se poursuivant jusqu'au compresseur du turbo compresseur (7). Ce volume correspond à la zone hachurée (12) de la figure 12. Dans un mode de réalisation du circuit de recirculation des gaz d'échappement, un collecteur peut être intégré entre la vanne EGR et le compresseur, dans ce cas $V_{bp}$ représente le volume de ce collecteur.
- $\Phi_{adm}, \Phi_{ech}$ : position des actionneurs des soupapes d'admission (8) et d'échappement (9). Ces variables quantifient un déphasage par rapport à une position de référence.
- $N_e$ : régime du moteur.

Variables du modèle de la boucle d'air

- $BGR$ : fraction massique de gaz brûlés dans le collecteur d'admission. Elle conditionne la masse de gaz brûlés présents dans le cylindre à la fermeture de la soupape admission.
- $BGR_{bp}$ : fraction massique de gaz brûlés dans le volume en aval de la vanne EGR.
- $D_{thr}$ : débit massique parcourant le refroidisseur à air (4).
- $D_{gb}$ : débit massique de gaz brûlés introduit par la vanne EGR (6).
- $D_{air}$ : débit massique d'air frais en entrée de la ligne d'admission.
- $D_{asp}$ : débit massique de remplissage du cylindre.
- $S$ : surface efficace de la vanne EGR. Cette grandeur caractérise la quantité de fluide pouvant être apte à traverser la vanne, elle est reliée à l'ouverture de la vanne via une cartographie caractéristique de la vanne considérée.
- $\tau$ : retard de transport des gaz entre le moment du mélange de l'air frais et des gaz brûlés et l'arrivée dans le collecteur d'admission.
- $P_{am}$ : pression en amont, en entrée de la vanne EGR.
- $P_{av}$ : pression en aval, en sortie de la vanne EGR.
- $\Delta P$ : différence de pression entre amont et aval de la vanne EGR $\Delta P = P_{am} - P_{av}$. Cette grandeur peut être mesurée grâce à l'instrumentation de la vanne EGR.
- $O$ : ouverture de la vanne. Cette grandeur, caractérise le ratio d'ouverture de la vanne.

Constantes du modèle de la boucle d'air

- $r$ : constante spécifique des gaz parfaits, qui est la même pour tous les gaz concernés ici (air et gaz d'échappement), et qui vaut 288 J/kg/K.
- $\gamma$ : rapport de capacités massiques des gaz. Les gaz étant supposés parfaits, ce rapport est une constante identique pour tous les gaz concernés, et vaut 1,4.

Ces notations, indexées par la mention-$^{sp}$, représentent les consignes associées aux grandeurs considérées.

Etape a) Mesure d'une différence de pression au niveau de la vanne EGR

Afin de commander la vanne EGR (6) de manière précise, on utilise, selon l'invention, un procédé de commande de la vanne EGR dépendant de la différence de pression $\Delta P$ au niveau de ladite vanne EGR (6). Dans un mode de réalisation pour connaître cette valeur, on peut utiliser un capteur de différence de pression (5) au niveau de la vanne EGR (6). Alternativement deux capteurs distincts pourront être utilisés, mesurant respectivement la pression en entrée de la vanne $P_{av}$ et la pression en sortie de la vanne $P_{am}$. Il est également envisageable de placer des capteurs de pression à d'autres endroits de la boucle d'air (10) puis de déduire la valeur de $\Delta P$ des valeurs mesurées.

Etape b) Choix d'une consigne de fraction de gaz brûlés dans le collecteur

Afin de contrôler le moteur de manière optimal, on choisit une consigne de fraction des gaz brûlés dans le collecteur d'admission $BGR^{sp}$. Pour choisir cette consigne $BGR^{sp}$, on peut utiliser une cartographie du moteur issue d'une calibration statique ou une stratégie de contrôle de gaz brûlés dans un moteur à combustion. Afin de gagner du temps de déroulement du procédé, il est préférable de réaliser cette étape simultanément à l'étape de mesure de la différence de pression au niveau de la vanne EGR (6).

Etape c) Calcul de la consigne d'ouverture de la vanne EGR

Pour calculer la consigne d'ouverture de la vanne EGR, on utilise une relation de perte de charge ponctuelle au niveau de la vanne EGR. Cette relation permet de déterminer la consigne d'ouverture $O^{sp}$ de la vanne en fonction de la différence de pression $\Delta P$ au niveau de la vanne EGR (6) et de la consigne de fraction de gaz brûlés dans le collecteur d'admission $BGR^{sp}$. De préférence, la relation de perte de charge ponctuelle se base sur une relation de Barré-Saint Venant appliquée à la vanne EGR, cette relation pouvant être linéarisée pour les faibles valeurs de $\Delta P$ (par exemple pour $\Delta P < 10\%P_{atm}$).

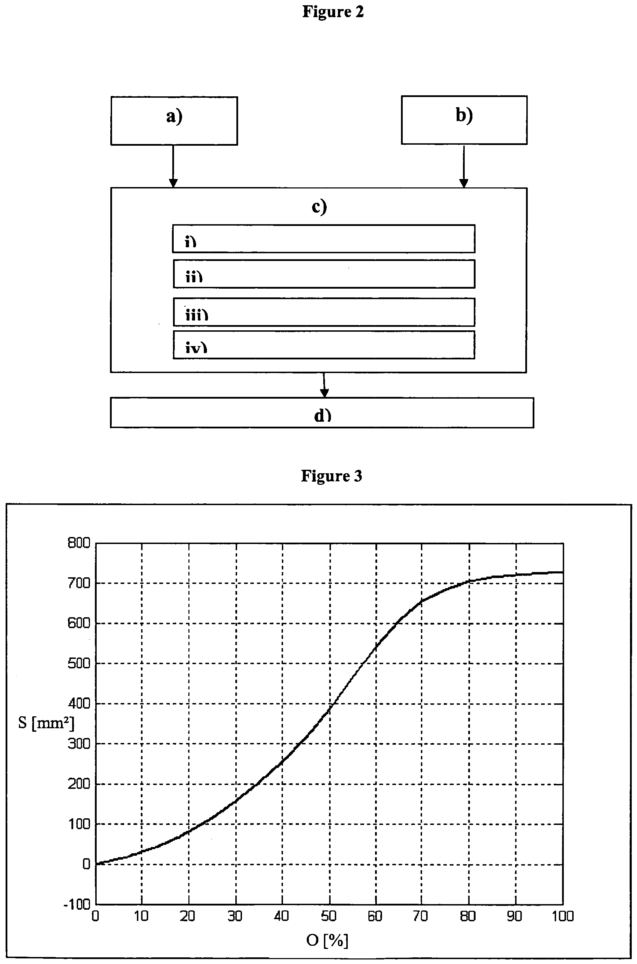

Dans un mode de réalisation, on applique une relation de charge ponctuelle dépendant de la différence de la pression $\Delta P$ au niveau de la vanne pour déterminer une consigne de surface efficace de la vanne $S^{sp}(\Delta P)$ à partir de la consigne de fraction de gaz brûlés dans le collecteur d'admission $BGR^{sp}$ ; puis on traduit la consigne de surface efficace de la vanne $S^{sp}(\Delta P)$ en une consigne d'ouverture $O^{sp}$ de la vanne EGR à partir d'une cartographie de la vanne. Un exemple d'une telle cartographie de vanne est illustré à la figure 3.

Avantageusement, la relation de perte de charge ponctuelle est adaptée au moteur grâce à un modèle de la boucle d'air (10), qui est un modèle dynamique du circuit d'admission d'air et du circuit de recirculation des gaz brûlés EGR. On appelle boucle d'air (10) l'ensemble du circuit d'admission et du circuit de recirculation du gaz. Les données d'entrée du modèle de boucle d'air sont les paramètres du moteur, la consigne de fraction de gaz brûlés $BGR^{sp}$, la différence de pression $\Delta P$ au niveau de la vanne EGR. Afin de maîtriser le comportement réel du moteur et de créer un modèle de boucle d'air le plus représentatif possible, il est important de connaître certains paramètres du moteur : c'est-à-dire des données le caractérisant, ainsi que des données concernant son fonctionnement. Ces paramètres peuvent être mesurés, simulés et/ou provenir des données du constructeur. Les paramètres mesurés ou simulés peuvent être la pression dans le collecteur d'admission $P_{adm}$, la température dans le collecteur d'admission $T_{adm}$, la pression atmosphérique $P_{atm}$, la température atmosphérique $T_{atm}$, la température en sortie de la vanne EGR $T_{am}$, les positions $\phi_{adm}$ et $\phi_{ech}$ des actionneurs de soupapes d'admission et d'échappement, le régime du moteur $N_e$.

Dans un mode de réalisation, la pression atmosphérique $P_{atm}$ et la température atmosphérique $T_{atm}$ peuvent être considérées comme des constantes pour simplifier le modèle. En outre, la température d'admission $T_{adm}$ est considéré constante ; en effet, l'échangeur (4) situé en amont du collecteur est dimensionné de sorte à assurer une telle régulation.

Ce modèle de la boucle d'air peut être composé d'un modèle de la dynamique des gaz brûlés et d'un modèle statique de remplissage du cylindre couplé avec un modèle dynamique du collecteur d'admission.

Dans un mode de réalisation avantageux, on construit le modèle de la boucle d'air en réalisant les étapes suivantes :

i) on applique un modèle statique de remplissage du cylindre pour calculer un débit massique de remplissage du cylindre $D_{asp}$ à partir de paramètres du moteur ;

ii) on applique un modèle dynamique du collecteur d'admission pour calculer un débit massique en aval du compresseur $D_{thr}$ à partir du débit massique de remplissage du cylindre $D_{asp}$, et de paramètres du moteur ;

iii) on applique un modèle de dynamique de transport des gaz pour déterminer une consigne de fraction des gaz brûlés dans le volume en aval de la vanne EGR $BGR_{bp}^{sp}$ à partir de la consigne de fraction de gaz brûlés dans le collecteur d'admission $BGR^{sp}$ ; et

iv) on applique un modèle dynamique de mélange des gaz frais et des gaz brûlés pour déterminer une consigne de débit massique de gaz brûlés introduits par la vanne EGR $D_{gb}^{sp}$ à partir du débit massique en aval du compresseur $D_{thr}$, de paramètres du moteur et de la consigne de fraction de gaz brulés dans le volume en aval de la vanne EGR $BGR_{bp}^{sp}$.

L'ensemble de ce mode de réalisation du procédé est décrit par le logigramme de la figure 2. Les étapes a) à d) étant représentées par des blocs ordonnés chronologiquement, et les étapes i) à iv) étant représentées par des blocs intégrés à l'étape c).

A la suite de la construction du modèle de la boucle d'air, on applique la relation de la perte de charge ponctuelle à la vanne EGR, ladite relation de charge ponctuelle étant fonction de ladite consigne de débit massique de gaz brûlés introduits par la vanne EGR $D_{gb}^{sp}$.

*Etape i) Modèle statique de remplissage du cylindre*

Ce modèle permet de calculer le débit massique de remplissage du cylindre. Un exemple d'un tel modèle a été développé à IFP Energies Nouvelles, France par T. LEROY et J. CHAUVIN et divulgué dans la demande de brevet FR 2941266 A1.

Pour ce faire, on estime le débit total parcourant le refroidisseur à air suralimenté. Une telle estimation est réalisée à l'aide d'un modèle statique de remplissage du cylindre couplé avec un modèle dynamique du collecteur admission.

On considère un modèle statique de remplissage estimant la masse de gaz brûlés dans le cylindre en fonction du régime, température et pression d'admission et les positions d'actionneurs. Equation (1)

$$\begin{cases} M_{asp}^{\text{int}} = \alpha_1 \dfrac{P_{adm}}{rT_{ad\ddot{u}}} V_{ivc} - M_{asp}^{ech} \\[2mm] M_{asp}^{ech} = \alpha_2 \dfrac{OF}{N_e} + \alpha_3 V_{evc} \end{cases}$$

avec

- $M_{asp}^{\text{int}}$ : masse de gaz brûlés à l'intérieur du cylindre,
- $M_{asp}^{ech}$ : masse de gaz brûlés à l'échappement du cylindre,
- $\alpha_1, \alpha_2, \alpha_3$ : cartographies connues fonction de $P_{adm}$ et $N_e$ (déterminées de manière expérimentale au banc moteur),
- $V_{ivc}$ : volume du cylindre à l'ivc (fermeture soupape admission), fonction de la position de l'actionneur de la soupape d'admission $\Phi_{adm}$, et des dimensions du moteur,
- $V_{evc}$ : volume du cylindre à l'evc (fermeture soupape échappement), fonction de la position de l'actionneur de la soupape d'échappement $\Phi_{ech}$, et des dimensions du moteur, et
- OF : facteur de croisement, fonction des positions des actionneurs des soupapes d'admission et d'échappement $\Phi_{adm}$ et $\Phi_{ech}$.

A partir de ce système d'équation on peut donc exprimer la masse de gaz brûlés à l'intérieur du cylindre dépendant de paramètres moteur $P_{adm}$, $N_e$, $\Phi_{adm}$, $\Phi_{ech}$ et du facteur de croisement OF.

Ledit facteur de croisement OF est déterminé par la relation :

$$OF = \int_{\theta_{ivo}}^{\theta_{iv}=\theta_{ev}} A_{\text{int}}\, d\theta + \int_{\theta_{iv}=\theta_{ev}}^{\theta_{evc}} A_{ech}\, d\theta$$

avec

- $A_{adm}$ et $A_{ech}$ : aires d'ouverture des soupapes d'admission et d'échappement, il s'agit de paramètres du moteur,
- $\theta$ : angle vilebrequin,
- $\theta_{ivo}$ : angle vilebrequin à l'ivo (ouverture soupape admission), fonction de la position de l'actionneur de la soupape d'admission $\Phi_{adm}$,
- $\theta_{evc}$ : angle vilebrequin à l'evc (fermeture soupape échappement), fonction de la position de l'actionneur de la soupape échappement $\Phi_{ech}$,
- $\theta_{iv} = \theta_{ev}$ : angle vilebrequin où les deux soupapes ont la même aire d'ouverture.

En combinant les équations du système (1), on peut définir alors une fonction g entre la masse de gaz brûlés en fonction de trois paramètres $P_{adm}$, $\Phi_{adm}$ et $\Phi_{ech}$, équation (2) :

$$M_{asp}^{int} = g(P_{adm}, \Phi_{adm}, \Phi_{ech})$$

$$M_{asp}^{int} = \alpha_1(P_{adm}, N_e)\frac{P_{adm}}{rT_{adm}}V_{ivc}(\Phi_{adm}) - \alpha_2(P_{adm}, N_e)\frac{OF(\Phi_{adù}, \Phi_{ech})}{N_e} - \alpha_3(P_{adm}, N_e)V_{ech}(\Phi_{ech})$$

Puis, on détermine le débit massique de remplissage du cylindre par la relation (3) :

$$D_{asp} = \frac{Ne}{30}M_{asp}^{int}$$

On combine ensuite les équations (2) et (3), et par souci de clarté, on omet le régime et la température d'admission dans l'expression. On peut ainsi définir une fonction f entre le débit massique de remplissage du cylindre et les trois paramètres $P_{adm}$, $\Phi_{adm}$, et $\Phi_{ech}$ (équation (4)).

$$D_{asp} = \frac{N_e}{30}M_{asp}^{int} = \frac{N_e}{30}g(P_{adm}, \Phi_{adm}, \Phi_{ech}) = f(P_{adm}, \Phi_{adm}, \Phi_{ech})$$

*Etape ii) Modèle dynamique du collecteur d'admission*

En modélisant les débits parcourant le collecteur d'admission, on peut calculer le débit massique en aval du papillon $D_{thr}$ à partir du débit de remplissage du cylindre $D_{asp}$ et de certains paramètres du moteur. Par exemple, on peut écrire l'équation suivante :

$$D_{thr} = D_{asp} + \frac{r}{V_{adm}T_{adm}}\frac{dP_{adm}}{dt}$$

où $V_{adm}$ est le volume du collecteur d'admission.
On peut alors déterminer une fonction h entre le débit massique en aval du compresseur $D_{thr}$ et les variables $D_{asp}$ et $\dfrac{dP_{adm}}{dt}$ (équation (5)) :

$$D_{thr} = h\left(D_{asp}, \frac{dP_{adm}}{dt}\right)$$

Ainsi, en combinant les équations (4) et (5), on peut écrire une fonction H entre le débit massique en aval du compresseur $D_{thr}$ et les variables $P_{adm}$, $\Phi_{adm}$, $\Phi_{ech}$ et $\dfrac{dP_{adm}}{dt}$ (équation (6)) :

$$D'_{thr} = h\left(D_{asp}, \frac{dP_{adm}}{dt}\right) = h\left(f(P_{adm}, \phi_{adm}, \phi_{ech}), \frac{dP_{adm}}{dt}\right) = H\left(P_{adm}, \phi_{adm}, \phi_{ech}, \frac{dP_{adm}}{dt}\right)$$

*Etape iii) Modèle dynamique de transport des gaz*

Cette étape du procédé consiste à déterminer la consigne de la fraction de gaz brûlés dans le collecteur admission. Une dynamique de transport représente l'éloignement spatial entre l'actionneur et le collecteur admission et correspond à un retard pur $\tau$, variable dans le temps. Une modélisation de ce retard peut donc s'écrire :

$$BGR(t) = BGR_{bp}(t - \tau(t))$$

En appliquant cette relation au niveau des consignes, l'égalité (7) devient :

$$BGR^{sp}(t) = BGR_{bp}^{sp}(t - \tau(t))$$

Ainsi, pour contrôler la composition en gaz brûlés du collecteur admission, on contrôle directement la composition dans le volume en aval de la vanne EGR. Cette étape peut être réalisée simultanément aux étapes i) et ii) pour un gain de temps de calcul, ou être réalisée avant ces étapes.

*Etape iv) Modèle dynamique de mélange des gaz*

Pour déterminer la consigne de débit massique de gaz brûlés introduits par la vanne EGR $D_{gb}^{sp}$, on doit modéliser la dynamique des gaz frais et des gaz brûlés.

Pour cela, on peut utiliser la modélisation suivante (8) :

$$\frac{d}{dt} BGR_{bp}(t) = \frac{rT_{am}}{P_{atm}V_{bp}}\left(-\left[D_{gb}(t) + D_{air}(t)\right]BGR_{bp} + D_{gb}(t)\right)$$

En régime stabilisé, on peut établir une équation (9) des débits :

$$D_{thr} = D_{gb} + D_{air}$$

Ainsi, en combinant les équations (6) à (9), on peut écrire une relation (10) entre le débit massique de gaz brûlés introduits par la vanne EGR et différentes variables :

$$D_{gb}^{sp} = \frac{P_{atm}V_{bp}}{rT_{am}}\frac{d}{dt}BGR^{sp} + H\left(P_{adm}, \phi_{adm}, \phi_{ech}, \frac{dP_{adm}}{dt}\right)BGR^{sp}$$

Ensuite, en appliquant une relation de charge ponctuelle au niveau de la vanne EGR, par exemple la relation de Barré-Saint Venant, on peut écrire une relation entre le débit massique des gaz brûlés introduits par la vanne EGR $D_{gb}$, la surface efficace S de la vanne EGR, la température en amont de la vanne $T_{am}$ et la différence de pression au niveau de la vanne (équation (11)) :

$$D_{gb} = \frac{SP_{am}}{\sqrt{rT_{am}}} \times \begin{cases} \left(\frac{P_{av}}{P_{am}}\right)^{\frac{1}{\gamma}}\sqrt{\frac{2\gamma}{\gamma-1}\left(1-\left(\frac{P_{av}}{P_{am}}\right)^{\frac{\gamma-1}{\gamma}}\right)} & \text{si } \frac{P_{av}}{P_{am}} > \left(\frac{2}{\gamma+1}\right)^{\frac{\gamma}{\gamma-1}} \\ \\ \sqrt{\gamma\left(\frac{2}{\gamma+1}\right)^{\frac{\gamma+1}{\gamma-1}}} & \text{sinon} \end{cases}$$

Cette relation est obtenue par l'application la relation de Barré Saint-Venant pour un fluide s'écoulement d'un point 1 (amont) à un point x (aval), qui permet de déterminer la vitesse V du fluide au point x :

$$V(x) = \sqrt{\frac{2\gamma}{\gamma-1} r T_1 \left(1 - \frac{P(x)}{P_1}\right)^{\frac{\gamma}{\gamma-1}}}$$

Ensuite, la vitesse est reliée au débit massique par la relation :

$$V(x) = \frac{D_{gb}}{\rho S}$$

Puis, pour obtenir l'équation (11), on applique la formule :

$$\rho = \frac{P_1}{rT}$$

Pour une simplification de ce modèle, la pression en aval de la vanne est considérée comme étant la pression atmosphérique, la relation ci-dessous peut donc être exprimée uniquement à l'aide de la quantité $\Delta P = P_{am} - P_{av}$ et $P_{atm}$. Dans un mode de réalisation avantageux de l'invention, ce modèle peut être linéarisé pour les faibles valeurs de $\Delta P$ (par exemple pour $\Delta P < 10\% P_{atm}$). Cette relation est ensuite inversée pour déterminer une fonction j entre la surface efficace S de la vanne et le débit massique des gaz brûlés introduits par la vanne EGR $D_{gb}$, la température en amont de la vanne $T_{am}$ et la différence de pression au niveau de la vanne $\Delta P$. En écrivant cette relation en termes de consigne, on a l'égalité suivante (12) :

$$S^{sp} = j\left(D_{gb}^{sp}, T_{am}, \Delta P\right) = j\left(\frac{P_{atm} V_{bp}}{r T_{am}} \frac{d}{dt} BGR^{sp} + H\left(P_{adm}, \phi_{adm}, \phi_{ech}, \frac{dP_{adm}}{dt}\right) BGR^{sp}, T_{am}, \Delta P\right)$$

La consigne de surface efficace de la vanne EGR peut donc s'écrire uniquement en fonction de paramètres moteurs connus, de la consigne de fraction de gaz brûlés dans le collecteur d'admission choisie, et de la variable $\Delta P$.

Enfin, l'ouverture O de la vanne est reliée à la surface efficace S de celle-ci par une cartographie caractéristique de la vanne considérée (figure 3). Cette cartographie de ladite vanne EGR peut être connue par des données du constructeur ou déterminée de manière expérimentale. On peut donc déterminer la consigne d'ouverture de la vanne à partir de la consigne de surface efficace de celle-ci.

Etape d) Commande de la vanne EGR

La consigne d'ouverture de la vanne $O^{sp}$ est ensuite appliquée à la vanne, pour cela on peut choisir une commande manuelle, hydraulique, pneumatique, électrique, électronique ou mécanique de ladite vanne.

Le procédé de contrôle selon l'invention permet donc :

- de contrôler la composition des gaz dans le collecteur admission d'un moteur à essence équipé d'un système EGR et d'un capteur de différence de pression entre l'amont et l'aval de la vanne EGR ;
- d'améliorer la réponse en transitoire de fraction de gaz brûlés, de sorte à fournir un meilleur agrément de conduite au conducteur ;
- d'utiliser le dispositif d'EGR sur une plage de fonctionnement plus importante et d'augmenter ainsi les performances du véhicule ; et
- de réduire les émissions de gaz d'échappement, sans avoir à augmenter la consommation du moteur.

En outre, l'invention concerne également un moteur à combustion comprenant au moins un cylindre et un collecteur d'admission, ledit moteur à combustion étant pourvu d'un turbocompresseur et d'un circuit de recirculation des gaz brûlés EGR basse pression comportant une vanne EGR pourvue d'un capteur de différence de pression au niveau de la vanne EGR, la vanne EGR étant commandée, par exemple électroniquement, par un procédé tel que défini ci-dessus.

**Revendications**

1. Procédé de commande d'un moteur à combustion (1) comprenant au moins un cylindre (2) et un collecteur d'admission (3), le moteur étant équipé d'un turbocompresseur (7) d'un circuit de recirculation des gaz brûlés EGR basse pression intégrant une vanne EGR (6), et comportant les étapes suivantes :

   a) on mesure une différence de pression $\Delta P$ au niveau de la vanne EGR ;
   b) on choisit une consigne $BGR^{sp}$ de fraction de gaz brûlés dans ledit collecteur d'admission (3) ;
   c) on calcule une consigne d'ouverture $O^{sp}$ de ladite vanne EGR (6) à partir d'une relation de perte de charge ponctuelle appliquée au niveau de ladite vanne EGR, telle que la relation de Barré-Saint Venant, ladite relation de perte de charge ponctuelle reliant l'ouverture de la vanne EGR à la différence de pression $\Delta P$ au niveau de la vanne EGR, et à ladite consigne $BGR^{sp}$ de fraction de gaz brûlés dans le collecteur d'admission, la relation de perte de charge ponctuelle est adaptée au moteur (1) grâce à un modèle de la boucle d'air (10), qui est un modèle dynamique du circuit d'admission d'air et du circuit de recirculation des gaz brûlés EGR, et qui est composé d'un modèle de la dynamique des gaz brûlés, et d'un modèle statique de remplissage du cylindre intégré dans un modèle dynamique du collecteur d'admission, et ledit modèle de la boucle d'air étant construit en réalisant les étapes suivantes :

      i) on applique un modèle statique de remplissage du cylindre pour calculer un débit massique de remplissage du cylindre $D_{asp}$ à partir de paramètres du moteur ;
      ii) on applique un modèle dynamique du collecteur d'admission pour calculer un débit massique en aval du compresseur dudit turbocompresseur (7) $D_{thr}$ à partir du débit massique de remplissage du cylindre $D_{asp}$, et de paramètres du moteur ;
      iii) on applique un modèle de dynamique de transport des gaz pour déterminer une consigne de fraction des gaz brûlés dans le volume en aval de la vanne EGR $BGR^{sp}_{bp}$ à partir de la consigne de fraction de gaz brûlés dans le collecteur d'admission $BGR^{sp}$ ;
      iv) on applique un modèle dynamique de mélange des gaz frais et des gaz brûlés pour déterminer une consigne de débit massique de gaz brûlés introduits par la vanne EGR $D^{sp}_{gb}$ à partir du débit massique en aval du compresseur $D_{thr}$, de paramètres du moteur et de la consigne de fraction de gaz brulés dans le volume en aval de la vanne EGR $BGR^{sp}_{bp}$, la relation de perte de charge ponctuelle étant fonction de cette consigne ;
      v) on applique ladite relation de perte de charge ponctuelle appliquée au niveau de ladite vanne EGR, qui relie ladite consigne d'ouverture $O^{sp}$ de ladite vanne EGR à la différence de pression $\Delta P$ au niveau de la vanne EGR, et à ladite une consigne de débit massique de gaz brûlés introduits par la vanne EGR $D^{sp}_{gb}$ et

   d) on commande ladite vanne EGR (6) en fonction de ladite consigne d'ouverture $O^{sp}$ de la vanne EGR (6).

2. Procédé selon la revendication 1, dans lequel le modèle de la dynamique de mélange des gaz frais et des gaz brûlés est défini par la formule :

$$\frac{d}{dt}BGR_{bp} = \frac{rT_{atm}}{P_{atm}V_{bp}}\left(-\left[D_{gb}(t) + D_{air}(t)\right]BGR_{bp} + D_{gb}(t)\right)$$

avec $BGR_{bp}$ : fraction de gaz brûlés dans le volume en aval de la vanne EGR,
$r$ : constante des gaz parfaits,
$T_{atm}$ : température atmosphérique,
$P_{atm}$ : pression atmosphérique,
$V_{bp}$ : volume de mélange d'air frais et des gaz brûlés,

$D_{gb}$ : débit massique de gaz brûlés introduit par la vanne EGR, et

$D_{air}$ : débit massique d'air frais en entrée de la ligne d'admission.

**3.** Procédé selon l'une des revendications précédentes, dans lequel le modèle de dynamique de transport des gaz représente un éloignement spatial entre la vanne EGR et le collecteur d'admission dudit moteur et correspond à un retard pur.

**4.** Procédé selon l'une des revendications précédentes, dans lequel on applique une relation de perte de charge ponctuelle définissant une consigne de surface efficace de la vanne $S^{sp}(\Delta P)$ en fonction de la différence de pression au niveau de la vanne EGR $\Delta P$ et de ladite consigne de fraction de gaz brûlés dans le collecteur d'admission $BGR^{sp}$ , puis on traduit la consigne de surface efficace de la vanne $S^{sp}(\Delta P)$ en une consigne d'ouverture $O^{sp}$ de la vanne EGR à partir d'une cartographie de la vanne.

**5.** Procédé selon l'une des revendications précédentes, dans lequel la relation de perte de charge ponctuelle se base sur une relation de Barré-Saint Venant, linéarisé pour les valeurs de différence de pression $\Delta P$ au niveau de la vanne EGR qui vérifient l'inéquation $\Delta P < 10\% P_{atm}$.

**6.** Procédé selon l'une des revendications précédentes, dans lequel la différence de pression au niveau de la vanne EGR (6) est mesurée par au moins un capteur de pression en amont et/ou en aval de la vanne EGR.

**7.** Procédé selon l'une des revendications précédentes, dans lequel le choix de ladite consigne de fraction de gaz brûlés dans le collecteur d'admission $BGR^{sp}$ est déterminée par une cartographie du moteur issue d'une calibration statique.

**8.** Moteur à combustion (1) comprenant au moins un cylindre (2) et un collecteur d'admission (3), ledit moteur à combustion étant d'un turbocompresseur et d'un circuit de recirculation des gaz brûlés EGR basse pression comportant une vanne EGR (6) pourvue d'un capteur de différence de pression (5) au niveau de ladite vanne EGR (6), **caractérisé en ce que** ledit moteur (1) comprend des moyens de commande dudit moteur, lesdits moyens de commande étant destinés à appliquer le procédé de commande selon l'une des revendications précédentes.

**Patentansprüche**

**1.** Verfahren zur Steuerung eines Verbrennungsmotors (1), der mindestens einen Zylinder (2) und einen Ansaugkrümmer (3) umfasst, wobei der Motor mit einem Turbokompressor (7) eines EGR-Rückführungskreislaufs von Abgasen mit niedrigem Druck ausgestattet ist, der ein EGR-Ventil (6) integriert, und umfassend die folgenden Schritte:

a) eine Druckdifferenz $\Delta P$ auf der Höhe des EGR-Ventils wird gemessen;
b) ein Sollwert $BGR^{sp}$ der Fraktion von Abgasen in dem Ansaugkrümmer (3) wird ausgewählt;
c) ein Sollwert der Öffnung $O^{sp}$ des EGR-Ventils (6) wird berechnet aus einer Beziehung des punktuellen Ladungsverlusts, angewendet auf der Höhe des EGR-Ventils, wie der Barre-Saint Venant-Beziehung, wobei die Beziehung des punktuellen Ladungsverlusts die Öffnung des EGR-Ventils verbindet mit der Druckdifferenz $\Delta P$ auf der Höhe des EGR-Ventils, und mit dem Sollwert $BGR^{sp}$ der Fraktion von Abgasen in dem Ansaugkrümmer, wobei die Beziehung des punktuellen Ladungsverlusts an den Motor (1) mit einem Modell einer Luftschleife (10) angepasst wird, das ein dynamisches Modell des Ansaugkreislaufs von Luft und des EGR-Rückführungskreislaufs von Abgasen ist, und das besteht aus einem Modell der Dynamik von Abgasen, und aus einem statischen Modell des Füllens des Zylinders, integriert in einem dynamischen Modell des Ansaugkrümmers, und wobei das Modell der Luftschleife konstruiert wird, indem die folgenden Schritte durchgeführt werden:

i) ein statisches Modell des Füllens des Zylinders wird angewendet, um einen Massendurchfluss des Füllens des Zylinders $D_{asp}$ aus Parametern des Motors zu berechnen;
ii) ein dynamisches Modell des Ansaugkrümmers wird angewendet, um einen Massendurchfluss stromabwärts von dem Kompressor des Turbokompressors (7) $D_{thr}$ aus dem Massendurchfluss des Füllens des Zylinders $D_{asp}$ und aus Parametern des Motors zu berechnen;

iii) ein Modell der Dynamik des Transports von Gasen wird angewendet, um einen Sollwert der Fraktion von Abgasen in dem Volumen stromabwärts von dem EGR-Ventil $BGR_{bp}^{sp}$ aus dem Sollwert der Fraktion von Abgasen in dem Ansaugkrümmer BGR$^{sp}$ zu bestimmen;

iv) ein dynamisches Modell der Mischung von frischen Gasen und von Abgasen wird angewendet, um einen Sollwert des Massendurchflusses von Abgasen, die von dem EGR-Ventil eingebracht werden, $D_{gb}^{sp}$ aus dem Massendurchfluss stromabwärts von dem Kompressor $D_{thr}$, aus Parametern des Motors und aus dem Sollwert der Fraktion von Abgasen in dem Volumen stromabwärts von dem EGR-Ventil $BGR_{bp}^{sp}$ zu berechnen, wobei die Beziehung des punktuellen Ladungsverlusts eine Funktion dieses Sollwerts ist;

v) die Beziehung des punktuellen Ladungsverlusts wird angewendet, angewendet auf der Höhe des EGR-Ventils, die den Sollwert der Öffnung O$^{sp}$ des EGR-Ventils verbindet mit der Druckdifferenz ΔP auf der Höhe des EGR-Ventils, und mit dem einen Sollwert des Massendurchflusses von Abgasen, die von dem EGR-Ventil eingebracht werden, $D_{gb}^{sp}$; und

d) das EGR-Ventil (6) wird als Funktion des Sollwerts der Öffnung O$^{sp}$ des EGR-Ventils (6) gesteuert.

2. Verfahren nach Anspruch 1, wobei das Modell der Dynamik der Mischung von frischen Gasen und von Abgasen durch die Formel definiert wird:

$$\frac{d}{dt}BGR_{bp} = \frac{rT_{atm}}{P_{atm}V_{bp}}\left(-\left[D_{gb}(t) + D_{air}(t)\right]BGR_{bp} + D_{gb}(t)\right)$$

wobei:

$BGR_{bp}$: Fraktion von Abgasen in dem Volumen stromabwärts von dem EGR-Ventil,
r: ideale Gaskonstante,
$T_{atm}$: Atmosphärentemperatur,
$P_{atm}$: Atmosphärendruck,
$V_{bp}$: Volumen der Mischung von frischen Gasen und von Abgasen,
$D_{gb}$: Massendurchfluss von Abgasen, die von dem EGR-Ventil eingebracht werden, und
$D_{air}$: Massendurchfluss von Frischluft am Eingang der Ansaugleitung.

3. Verfahren nach einem der vorhergehenden Ansprüche, wobei das Modell der Dynamik des Transports von Gasen einen räumlichen Abstand zwischen dem EGR-Ventil und dem Ansaugkrümmer des Motors repräsentiert und einer reinen Verzögerung entspricht.

4. Verfahren nach einem der vorhergehenden Ansprüche, wobei eine Beziehung des punktuellen Ladungsverlusts angewendet wird, die einen Sollwert der wirksamen Oberfläche des Ventils S$^{sp}$(ΔP) als Funktion der Druckdifferenz auf der Höhe des EGR-Ventils ΔP und des Sollwerts der Fraktion von Abgasen in dem Ansaugkrümmer BGR$^{sp}$ definiert, und dann der Sollwert der wirksamen Oberfläche des Ventils S$^{sp}$(ΔP) in einen Sollwert der Öffnung O$^{sp}$ des EGR-Ventils aus einer Kartographie des Ventils übersetzt wird.

5. Verfahren nach einem der vorhergehenden Ansprüche, wobei die Beziehung des punktuellen Ladungsverlusts auf einer Barré-Saint Venant-Beziehung basiert, linearisiert für die Werte der Druckdifferenz ΔP auf der Höhe des EGR-Ventils, welche die Ungleichung ΔP < 10 % Patm verifizieren.

6. Verfahren nach einem der vorhergehenden Ansprüche, wobei die Druckdifferenz auf der Höhe des EGR-Ventils (6) von mindestens einem Drucksensor stromaufwärts und/oder stromabwärts von dem EGR-Ventil gemessen wird.

7. Verfahren nach einem der vorhergehenden Ansprüche, wobei die Auswahl des Sollwerts der Fraktion von Abgasen in dem Ansaugkrümmer BGR$^{sp}$ durch eine Kartographie des Motors aus einer statistischen Kalibrierung bestimmt wird.

8. Verbrennungsmotor (1), welcher mindestens einen Zylinder (2) und einen Ansaugkrümmer (3) umfasst, wobei der Verbrennungsmotor mit einem Turbokompressor und mit einem EGR-Rückführungskreislauf von Abgasen mit niedrigem Druck ausgestattet ist, umfassend ein EGR-Ventil (6), versehen mit einem Druckdifferenzsensor (5) auf der Höhe des EGR-Ventils (6), **dadurch gekennzeichnet, dass** der Motor (1) Mittel zur Steuerung des Motors umfasst, wobei die Steuermittel dazu bestimmt sind, das Steuerverfahren nach einem der vorhergehenden Ansprüche anzuwenden.

**Claims**

1. A method of controlling a combustion engine (1) comprising at least one cylinder (2) and an intake manifold (3), the engine being equipped with a turbocharger (7) of a low-pressure burned gas recirculation EGR circuit including an EGR valve (6), and comprising the following stages:

   a) measuring a pressure difference $\Delta P$ at the EGR valve,
   b) selecting a burned gas fraction setpoint $BGR^{sp}$ in said intake manifold (3),
   c) calculating an opening setpoint $O^{sp}$ for said EGR valve (6) from a minor head loss relation applied at said EGR valve, such as the Saint Venant relation, said minor head loss relation relating the opening of the EGR valve to pressure difference $\Delta P$ at the EGR valve, and to said burned gas fraction setpoint $BGR^{sp}$ in the intake manifold, the minor head loss relation is adapted to engine (1) by means of a model of air loop (10), which is a dynamic model of the air intake circuit and of the EGR burned gas recirculation circuit, and which consists of a model of the burned gas dynamics and of a static cylinder filling model integrated in a dynamic model of the intake manifold, and said air loop model being constructed by carrying out the following stages:

   i) applying a static cylinder filling model to calculate a cylinder filling mass flow rate $D_{asp}$ from engine parameters,
   ii) applying a dynamic model of the intake manifold to calculate a mass flow rate $D_{thr}$ downstream from the compressor of said turbocharger (7), from cylinder filling mass flow rate $D_{asp}$ and engine parameters,

   iii) applying a dynamic gas transport model to determine a burned gas fraction setpoint $BGR_{bp}^{sp}$ in the volume downstream from the EGR valve, from burned gas fraction setpoint $BGR^{sp}$ in the intake manifold,

   iv) applying a dynamic fresh gas and burned gas mixing model to determine a mass flow rate setpoint $D_{gb}^{sp}$ for burned gas fed through the EGR valve, from mass flow rate $D_{thr}$ downstream from the compressor, from engine parameters and from burned gas fraction setpoint $BGR_{bp}^{sp}$ in the volume downstream from the EGR valve, the minor head loss relation being a function of this setpoint,
   v) applying said minor head loss relation applied at said EGR valve, which relates said opening setpoint $O^{sp}$ of said EGR valve to pressure difference $\Delta P$ at the EGR valve, and to said mass flow rate setpoint $D_{gb}^{sp}$ for burned gas fed through the EGR valve, and

   d) controlling said EGR valve (6) as a function of said opening setpoint $O^{sp}$ of EGR valve (6).

2. A method as claimed in claim 1, wherein the fresh gas and burned gas mixing dynamics model is defined by the formula:

$$\frac{d}{dt}BGR_{bp} = \frac{rT_{atm}}{P_{atm}V_{bp}}\left(-\left[D_{gb}(t) + D_{air}(t)\right]BGR_{bp} + D_{gb}(t)\right)$$

with: $BGR_{bp}$ : burned gas fraction in the volume downstream from the EGR valve,
$r$ : ideal gas constant,
$T_{atm}$ : atmospheric temperature,
$P_{atm}$ : atmospheric pressure,
$V_{bp}$ : fresh air and burned gas mixing volume,
$D_{gb}$ : mass flow rate of burned gas fed through the EGR valve, and

$D_{air}$ : mass flow rate of fresh air at the intake line inlet.

3. A method as claimed in any one of the previous claims, wherein the gas transport dynamics model represents a spatial distance between the EGR valve and the intake manifold of said engine, and it corresponds to a pure delay.

4. A method as claimed in any one of the previous claims, wherein a minor head loss relation defining an effective surface area setpoint $S^{sp}(\Delta P)$ for the valve is applied as a function of pressure difference $\Delta P$ at the EGR valve and of said burned gas fraction setpoint $BGR^{sp}$ in the intake manifold, then the effective valve surface area setpoint $S^{sp}(\Delta P)$ is expressed as an opening setpoint $O^{sp}$ of the EGR valve from a map of the valve.

5. A method as claimed in any one of the previous claims, wherein the minor head loss relation is based on a Saint Venant relation, linearized for the pressure difference values $\Delta P$ at the EGR valve that satisfy the inequality $\Delta P < 10\% P_{atm}$.

6. A method as claimed in any one of the previous claims, wherein the pressure difference at EGR valve (6) is measured by at least one pressure detector upstream and/or downstream from the EGR valve.

7. A method as claimed in any one of the previous claims, wherein selection of said burned gas fraction setpoint $BGR^{sp}$ in the intake manifold is determined by an engine map resulting from a static calibration.

8. A combustion engine (1) comprising at least one cylinder (2) and an intake manifold (3), said combustion engine being provided with a turbocharger and a low-pressure burned gas recirculation EGR circuit comprising an EGR valve (6) equipped with a pressure difference detector (5) at said EGR valve (6), **characterized in that** said engine (1) comprises means for controlling said engine, said control means being intended to apply the control method as claimed in any one of the previous claims.

**Figure 1**

**Figure 2**

**Figure 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2947007 A1
- EP 2098710 A1
- EP 0485089 A2
- WO 2010010246 A
- FR 2941266 A1